# EUROPÄISCHE PATENTANMELDUNG

(11) **EP 2 096 395 A1**
(43) Veröffentlichungstag der Anmeldung: **02.09.2009**
(21) Anmeldenummer: 08003790.6
(22) Anmeldetag: 29.02.2008
(51) Int. Cl.: F28C 1/00, F28F 25/08, F28G 1/16, F28G 15/02

(54) **Vorrichtung zum Reinigen von Kühleinbauten**

(71) Anmelder: SPX-Cooling Technologies GmbH, 40882 Ratingen (DE)
(72) Erfinder: Roth, Manfred, Dr., 4731 Raeren (BE); Jorewitz, Thomas, 44896 Bochum (DE)
(74) Vertreter: Lang, Friedrich

(57) **Zusammenfassung**

Um Kühleinbauten insbesondere in Nasskühltürmen konstruktiv einfach reinigen zu können, schlägt die Erfindung eine Vorrichtung zum Reinigen von Kühleinbauten vor, welche in einem Prozessraum insbesondere eines Nasskühlturms derart angeordnet sind, dass an deren Oberflächen eine Kühlflüssigkeit und ein Kühlgas miteinander in Kontakt treten und eine Wärme- und/oder Stoffübertragung zwischen der Kühlflüssigkeit und dem Kühlgas erfolgen können, wobei die Reinigungsvorrichtung innerhalb des Prozessraumes dauerhaft angeordnet ist.

## Beschreibung

Die Erfindung betrifft eine Vorrichtung zum Reinigen von Kühleinbauten, welche in einem Prozessraum insbesondere eines Nasskühlturms derart angeordnet sind, dass an deren Oberflächen eine Kühlflüssigkeit und ein Kühlgas miteinander in Kontakt treten und eine Stoff- und/oder Wärmeübertragung zwischen der Kühlflüssigkeit und dem Kühlgas erfolgen können.

Gattungsgemäße Kühleinbauten sind aus dem Stand der Technik insbesondere hinsichtlich Nasskühltürme gut bekannt. Insbesondere in einem solchen Nasskühlturm wird Kühlwasser, welches zur Kühlung eines vorangegangenen Prozesses benötigt wurde, im Gegenstrom oder im Kreuzstrom zu einem Kühlluftstrom geführt. Dadurch dass der Kühlluftstrom in direkten Kontakt mit dem Kühlwasser kommen kann, wird das Kühlwasser gut gekühlt, und die in dem Kühlwasser enthaltene Wärmeenergie des vorangegangenen Prozesses kann an die Kühlluft und damit an die Umgebungsluft abgeführt werden. Dieser Kühlkreislauf wird insbesondere im Nasskühlturm in einem offenen Kreislauf zur Umgebung betrieben.

Da bei einem solchen offenen Kühlkreislauf nahezu immer mit Verlusten des Kühlwassers zu rechnen ist, etwa durch Verdunstung und/oder Abschlemmung, wird häufig Wasser aus Flüssen, Seen oder einem Meer als Kühlwasser verwendet. Jedoch besteht hierbei die Gefahr, dass bei diesem offenen Kühlkreislauf Verunreinigungen mit in den Kühlkreislauf eingebracht werden können. Diese Verunreinigungen können sich an Bauteilkomponenten anlagern und diese verschmutzen, so dass es zu einer erheblichen Reduzierung der Kühlleistung kommen kann.

Insbesondere in Nasskühltürmen werden Kühleinbauten verwendet, welche die Aufgabe haben, insbesondere durch Berieselung mit Kühlwasser einen Wärme- und/oder Stoffaustausch zwischen dem Kühlwasser und der Kühlluft möglichst optimal zu gestalten. Jedoch verlieren insbesondere diese Kühleinbauten mit zunehmendem Verschmutzungsgrad rasch ihre Wirksamkeit, so dass sich die in den Kühlkreislauf eingetragenen Verunreinigungen besonders negativ auf den Wirkungsgrad von solchen Nasskühltürmen aus wirken können.

Deshalb ist es erforderlich, diese Kühleinbauten regelmäßig auszutauschen und durch neue beziehungsweise gebrachte und gereinigte Kühleinbaupakete zu ersetzen.

Ein derartiger Nasskühlturm ist beispielsweise in der WO 2006/099970 A2 beschrieben, in welchem Kühleinbauten einzelne Zellen bilden, welche innerhalb des Nasskühlturms eine maschenartige Struktur bereitstellen, an der abzukühlendes Kühlwasser herunterlaufen und hierbei von Kühlluft großflächig gekühlt werden kann.

Es ist Aufgabe vorliegender Erfindung, eine erreichbare Kühlleistung gattungsgemäßer Kühleinbauten, insbesondere an einem Nasskühlturm, möglichst dauerhaft zu erhalten oder zumindest Austauschintervalle derartiger Kühleinbauten wesentlich zu verlängern.

Die Aufgabe der Erfindung wird von einer Vorrichtung zum Reinigen von Kühleinbauten, welche in einem Prozessraum insbesondere eines Nasskühlturms derart angeordnet sind, dass an deren Oberflächen eine Kühlflüssigkeit und ein Kühlgas miteinander in Kontakt treten und eine Wärme- und/oder Stoffübertragung zwischen der Kühlflüssigkeit und dem Kühlgas erfolgen können, gelöst, wobei die Reinigungsvorrichtung innerhalb des Prozessraumes angeordnet ist.

Vorteilhafter Weise befindet sich die Reinigungsvorrichtung zum Reinigen der Kühleinbauten beispielsweise im Inneren eines Nasskühlturms, so dass die Kühleinbauten im eingebauten und betriebsbereiten Zustand gereinigt werden können.

Ein besonders großer Vorteil kann darin gesehen werden, dass vorhandene Kühleinbauten nicht mehr ausgetauscht werden müssen oder sich zumindest die vorgesehenen Austauschintervalle hinsichtlich der Kühleinbauten erheblich verlängern.

Der Begriff "Kühleinbauten" erfasst hierbei jegliche Einrichtungen, mittels welchen beispielsweise ein abzukühlendes Kühlwasser großflächig mit einer Kühlluft in Kontakt gebracht werden kann. Beispielsweise bestehen derartige Kühleinbauten aus Kunststoff etwa in Form von Folienpaketen oder Gitterpaketen.

Als Kühlflüssigkeit wird vorliegend jegliche Flüssigkeit bezeichnet, mittels der Abwärme eines Arbeitsprozesses aufgenommen werden kann, welche in die Umgebung abgegeben werden soll.

In diesem Zusammenhang kann als Kühlgas jegliches Gas verwendet werden, welches dazu geeignet ist, Wärmeenergie von der Kühlflüssigkeit aufzunehmen. In einem offenen Kühlkreislauf, wie er beispielsweise bei Nasskühltürmen zu finden ist, eignet sich Kühlluft aus der Umgebung besonders gut, da diese großvolumig aus der Umgebung entnommen und nach dem Kühlprozess erwärmt wieder in die Umgebung abgegeben werden kann.

Der Begriff "Prozessraum" beschreibt vorliegend einen Raum, in welchem die Kühleinbauten derart angeordnet werden können, dass einerseits an ihren Oberflächen das Kühlwasser herunterfließen und andererseits die Kühlluft im Gegenstrom oder Kreuzstrom gegenüber dem Kühlwasser geführt werden kann, so dass zwischen dem Kühlwasser und der Kühlluft eine Wärme- und/oder Stoffübertragung gut erfolgen kann.

Insbesondere bei Nasskühltürmen findet neben einer Wärmeübertragung auch eine Stoffübertragung zwischen dem Kühlwasser und der Kühlluft statt, wenn die Kühlluft Feuchtigkeit des Kühlwassers aufnimmt, welche dann mit der Kühlluft aus den Nasskühltürmen in die Umgebung austreten kann.

Es versteht sich, dass eine derartige Reinigungsvorrichtung vielseitig in bzw. an einem Prozessraum bereit gestellt werden kann. Beispielsweise ist sie lediglich temporär in vorgegebenen Reinigungsintervallen in den Prozessraum eingebracht, so dass sie zeitlich hintereinander hinsichtlich mehrerer Prozessräume eingesetzt werden kann.

Eine bevorzugte Ausführungsvariante sieht vor, dass die vorliegende Reinigungsvorrichtung innerhalb des Prozessraumes dauerhaft angeordnet ist. Hierdurch ist sie im Bedarfsfall immer vor Ort sofort einsetzbar.

In diesem Zusammenhang kann die Aufgabe der Erfindung auch von einem Verfahren zum Reinigen von in einem Prozessraum eingebauten und betriebsbereiten Kühleinbauten gelöst werden, bei welchem in dem Prozessraum eine Reinigungsvorrichtung gegenüber den Kühleinbauten verlagert wird und die Kühleinbauten hierbei mittels eines Reinigungsmediums gereinigt werden. Mittels dieses Reinigungsverfahrens kann die Gefahr erheblich verringert werden, dass sich an den Kühleinbauten unvorteilhaft schnell Verschmutzungen anlagern, wodurch die Kühlleistung der Kühleinbauten nachhaltig negativ beeinträchtigt werden kann.

Damit die Reinigungsvorrichtung jede der Kühleinbauten problemlos erreichen kann, ist es vorteilhaft, wenn die Reinigungsvorrichtung innerhalb des Prozessraumes verlagerbar angeordnet ist. Mittels der verlagerbaren Reinigungsvorrichtung kann baulich auf besonders einfache Weise erzielt werden, dass zumindest alle kritischen Bereiche, etwa im Inneren eines Nasskühlturms, von der Reinigungsvorrichtung erreicht werden können. Somit können vorzugsweise alle Kühleinbauten vorteilhaft gereinigt werden.

Damit auch horizontal nebeneinander angeordnete Kühleinbauten gut erreichbar sind, ist es vorteilhaft, wenn die Reinigungsvorrichtung innerhalb des Prozessraumes horizontal verlagerbar angeordnet ist.

Um auch etagenförmig angeordnete Kühleinbauten von der Reinigungsvorrichtung problemlos erreichen zu können, ist es vorteilhaft, wenn die Reinigungsvorrichtung innerhalb des Prozessraumes vertikal verlagerbar angeordnet ist.

Eine vorteilhafte Ausführungsform sieht vor, dass die Reinigungsvorrichtung mobile Mittel zum Verlagern der Reinigungsvorrichtung umfasst. Beispielsweise umfassen die mobilen Verlagerungsmittel ein Fahrgestell. Mittels eines solchen Fahrgestells kann baulich besonders einfach sichergestellt werden, dass die Reinigungsvorrichtung, beispielsweise an Traversen innerhalb eines Nasskühlturms geführt, im Prozessraum zu verschiedenen Einsatzorten bewegt werden kann.

In diesem Zusammenhang sieht eine weitere bevorzugte Ausführungsvariante vor, dass die Reinigungsvorrichtung stationäre Mittel zum Verlagern der Reinigungsvorrichtung umfasst. Die stationären Verlagerungsmittel zeichnen sich insbesondere dadurch aus, dass sie ortsfest innerhalb des Prozessraumes angeordnet werden können.

Umfassen die stationären Verlagerungsmittel ein Traggestellt, an welchem beispielsweise das Fahrgestellt der Reinigungsvorrichtung mobil gelagert und geführt sein kann, kann die Reinigungsvorrichtung mit ihrem Fahrgestell vorteilhaft innerhalb des Prozessraumes bewegt werden.

Eine baulich besonders einfache Konstruktion sieht vor, dass die stationären Verlagerungsmittel die Kühleinbauten umfassen. Sind beispielsweise in den Kühleinbauten Traversen integriert, an welchen ein Fahrgestell der Reinigungsvorrichtung verlagerbar angeordnet werden kann, ist die Reinigungsvorrichtung konstruktiv besonders einfach bereitgestellt.

Eine weitere Ausführungsvariante hinsichtlich der Reinigungsvorrichtung sieht vorteilhafter Weise Hochdruckreinigungsdüsen, insbesondere Flüssigkeitshochdruckreinigungsdüsen, zum Reinigen der Kühleinbauten vor. Hierdurch lassen sich die Oberflächen der Kühleinbauten gezielt und insbesondere auch ohne direkten Kontakt etwa von Reinigungsbürsten reinigen.

Mittels der Hochdruckreinigungsdüsen kann ein genügend starker Reinigungsmittelstrahl erzeugt werden, der beim Aufprall auf die Oberflächen der Kühleinbauten vorhandene Verschmutzungen lösen kann. Die gelösten Verschmutzungen können dann beispielsweise bei einem Flüssigkeitshochdruckstrahl mittels der Flüssigkeit fortgespült werden.

Es versteht sich, dass auch andere Reinigungseinrichtungen im Zusammenhang mit der vorliegenden Reinigungsvorrichtung verwendet werden können. Beispielsweise können die Reinigungseinrichtungen auch unmittelbar mit den Kühleinbauten beziehungsweise mit deren Oberflächen in Kontakt treten.

Um selbst hochbauende Kühleinbauten vorteilhaft reinigen zu können, ist es vorteilhaft, wenn vorhandene Reinigungseinrichtungen an der Reinigungsvorrichtung vertikal verlagerbar angeordnet sind.

Die Kühleinbauten lassen sich weiter vorteilhaft reinigen, wenn die Hochdruckreinigungsdüsen in die Kühleinbauten, insbesondere in Zwischenräume beziehungsweise in Kanäle der Kühleinbauten, versenkbar an der Reinigungsvorrichtung angeordnet sind.

Damit eine Vielzahl an Zwischenräumen beziehungsweise an Kanälen der Kühleinbauten idealerweise gleichzeitig gereinigt werden kann, ist es vorteilhaft, wenn die Reinigungsvorrichtung ein Mehrkanalreinigungsmodul mit einer Vielzahl an Hochdruckreinigungsdüsen aufweist.

Umfasst das Mehrkanalreinigungsmodul mobile Verlagerungsmittel, kann zusätzlich sichergestellt werden, dass die Vielzahl an Hochdruckdüsen idealerweise gleichzeitig in verschiedene Zwischenräume beziehungsweise in verschiedene Kanäle der Kühleinbauten eindringen und dort die Kühleinbauten reinigen kann.

In diesem Zusammenhang ist es vorteilhaft, wenn in mittels der Kühleinbauten gebildeten Zwischenräume beziehungsweise Kanäle Reinigungseinrichtungen, wie etwa Hochdruckreinigungsdüsen, hinein verlagert und die Kühleinbauten von Innen gereinigt werden können.

Es versteht sich, dass die vorliegend erläuterte Reinigungsvorrichtung vielseitig und vielerorts einsetzbar ist. Wie bereits eingangs erwähnt, ist es besonders vorteilhaft, wenn die Reinigungsvorrichtung innerhalb eines Nasskühlturms angeordnet ist, da in einem Nasskühlturm verwendete Kühleinbauten oftmals mit Kühlwasser aus Flüssen, Seen oder dem Meer in Kontakt kommen und hierdurch einer besonders intensiven Verunreinigung unterliegen können.

Deshalb wird die Aufgabe der Erfindung auch von einem Nasskühlturm mit einem Prozessraum gelöst, in welchem zum Kühlen eines Kühlmediums Kühleinbauten angeordnet sind, und der Nasskühlturm sich dadurch auszeichnet, dass in dem Prozessraum eine Vorrichtung zum Reinigen der Kühleinbauten angeordnet ist. Besonders vorteilhaft lassen sich die Kühleinbauten in dem Nasskühlturm reinigen, wenn in dem Prozessraum wenigstens eine Reinigungsvorrichtung nach einem der vorstehend genannten Merkmale vorgesehen ist.

Nachfolgend wird die Erfindung anhand eines in der Zeichnung dargestellten Ausführungsbeispiels weiter beschrieben.

Es zeigen schematisch:
- Figur 1: eine Seitenansicht einer verlagerbaren Reinigungsvorrichtung in einem Nasskühlturm,
- Figur 2: eine Schnittansicht zweier Reinigungsdüsen in einem Kühleinbau, und
- Figur 3: eine perspektivische Ansicht eines Mehrkanalreinigungsmoduls.

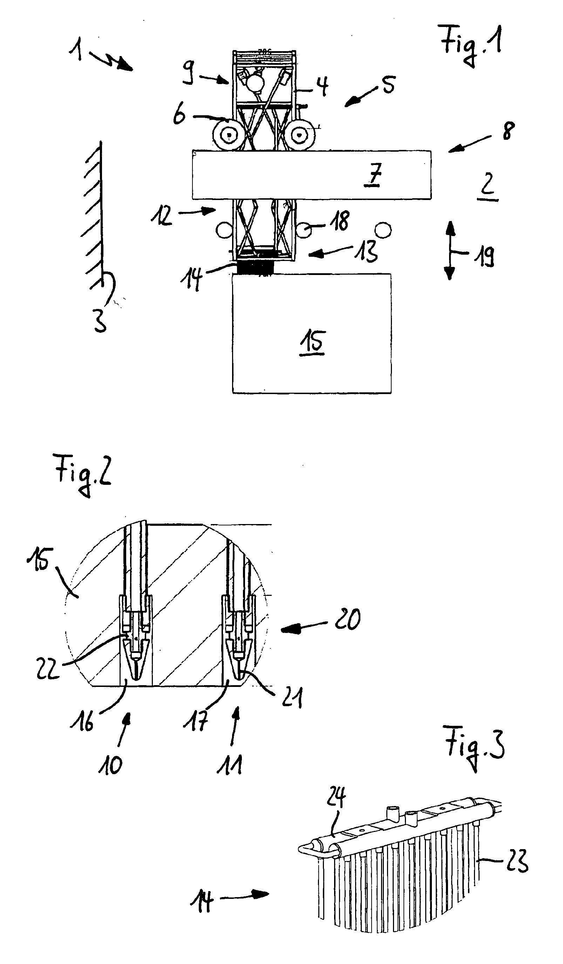

Die in der Figur 1 gezeigte Reinigungsvorrichtung 1 ist in einem Prozessraum 2 eines Nasskühlturms 3 angeordnet. Die Reinigungsvorrichtung 1 umfasst in diesem Ausführungsbeispiel im Wesentlichen ein Fahrgestell 4 als mobile Verlagerungsmittel 5, wobei das Fahrgestell 4 mit Rollen 6 (hier nur exemplarisch beziffert) ausgestattet ist, mittels welchen die Reinigungsvorrichtung 1 im Prozessraum 2 horizontal auf und entlang einer Traverse 7 bewegt werden kann. Die Traverse 7 ist ortsfest zusätzlich innerhalb des Nasskühlturms 3 angeordnet und kann zumindest in diesem Ausführungsbeispiel als stationäre Verlagerungsmittel 8 der Reinigungsvorrichtung 1 angesehen werden.

Innerhalb des Fahrgestells 4 ist eine nicht näher erläuterte Pumpen- und Antriebseinheit 9 vorgesehen, mittels welcher die Reinigungsvorrichtung 1 angetrieben werden kann und mittels welcher eine Reinigungsflüssigkeit, wie etwa Wasser, mit atmosphärischen Überdruck aus Hochdruckreinigungsdüsen 10 und 11 (siehe Figur 2) der Reinigungsvorrichtung 1 heraus gepumpt werden kann.

Darüber hinaus verfügt die Reinigungsvorrichtung 1 über eine Senk- und Hebeeinrichtung 12, an deren unterem Ende 13 ein Mehrkanalreinigungsmodul 14 mit den Hochdruckreinigungsdüsen 10 und 11 befestigt ist.

Bei einem Reinigungsbedarf von in dem Prozessraum 2 befindlichen Kühleinbauten 15 wird die Reinigungsvorrichtung 1 oberhalb der Kühleinbauten 15 positioniert und das Mehrkanalreinigungsmodul 14 mit den Hochdruckreinigungsdüsen 10 und 11 wird von oben auf die Kühleinbauten 15 herab gesenkt.

Damit insbesondere die Hochdruckreinigungsdüsen 10 und 11 ausreichend präzise oberhalb auch von zu reinigenden Kühlkanälen 16 bzw. 17 der Kühleinbauten 15 positioniert werden können, sind in dem Prozessraum 2 noch Positionier- und Führungseinrichtungen 18 (hier nur exemplarisch beziffert) vorgesehen, die paarweise eine gute und präzise Führung der Senk- und Hebeeinrichtung 12 der Reinigungsvorrichtung 1 insbesondere beim Senken und Heben in vertikaler Richtung 19 gewährleisten.

Jede der Hochdruckreinigungsdüsen 10, 11 umfasst eine Düsenspitze 20 (hier nur exemplarisch in der Figur 2 gezeigt) mit einer axialen Wasserstrahlaustrittsöffnung 21 und mit radialen Wasserstrahlaustrittsöffnungen 22, so dass die Kühlkanäle 16, 17 besonders intensiv von Verschmutzungen gereinigt werden können.

Eine möglichst große Zahl an Kühlkanälen 16 bzw. 17 kann mit einem einzigen Reinigungszyklus erreicht werden, wenn die Hochdruckreinigungsdüsen 16 bzw. 17 parallel zueinander in Vertikalführungen 23 (siehe Figur 3) des Mehrkanalreinigungsmoduls 14 vertikal verlagerbar geführt sind. Die Vertikalführungen 23 sind hierbei an einem Versorgungs- und Halterohr 24 befestigt, so dass sie einerseits sicher gehalten sind und andererseits alle Hochdruckreinigungsdüsen 16 bzw. 17 mit Wasser versorgt werden können. Mittels des Versorgungs- und Halterohrs 24 kann das gesamte Mehrkanalreinigungsmodul 14 an dem unteren Ende 13 der Senk- und Hebeeinrichtung 12 baulich einfach befestigt werden.

Es versteht sich, dass die der Erfindung zu Grunde liegende Reinigungsvorrichtung 1 vielfältig gestaltet sein kann. Das vorstehend erläuterte Ausführungsbeispiel ist deshalb nur eine erste Variante, wie eine Reinigungsvorrichtung 1 zum Reinigen von Kühleinbauten 15 gestaltet sein kann.

## Patentansprüche

1. Vorrichtung (1) zum Reinigen von Kühleinbauten (15), welche in einem Prozessraum (2) insbesondere eines Nasskühlturms (3) derart angeordnet sind, dass an deren Oberflächen eine Kühlflüssigkeit und ein Kühlgas miteinander in Kontakt treten und eine Wärme- und/oder Stoffübertragung zwischen der Kühlflüssigkeit und dem Kühlgas erfolgen können,
**dadurch gekennzeichnet,**
**dass** die Reinigungsvorrichtung (1) innerhalb des Prozessraumes (2) angeordnet ist.

2. Reinigungsvorrichtung (1) nach Anspruch 1,
**dadurch gekennzeichnet,**
**dass** die Reinigungsvorrichtung (1) innerhalb des Prozessraumes (2) dauerhaft angeordnet ist.

3. Reinigungsvorrichtung (1) nach Anspruch 1 oder 2,
**dadurch gekennzeichnet,**
**dass** die Reinigungsvorrichtung (1) innerhalb des Prozessraumes (2) verlagerbar angeordnet ist.

4. Reinigungsvorrichtung (1) nach einem der Ansprüche 1 bis 3,
**gekennzeichnet**
**durch** mobile Mittel (5) zum Verlagern der Reinigungsvorrichtung (1).

5. Reinigungsvorrichtung (1) nach einem der Ansprüche 1 bis 4,
**gekennzeichnet**
**durch** stationäre Mittel (8) zum Verlagern der Reinigungsvorrichtung (1).

6. Reinigungsvorrichtung (1) nach Anspruch 5,
**dadurch gekennzeichnet,**
**dass** die stationären Verlagerungsmittel (8) die Kühleinbauten (15) umfassen.

7. Reinigungsvorrichtung (1) nach einem der Ansprüche 1 bis 6,
**gekennzeichnet**
**durch** Hochdruckreinigungsdüsen (10, 11), insbesondere Flüssigkeitshochdruckreinigungsdüsen, zum Reinigen der Kühleinbauten (15).

8. Reinigungsvorrichtung (1) nach Anspruch 7,
**dadurch gekennzeichnet,**
**dass** die Hochdruckreinigungsdüsen (10, 11) in die Kühleinbauten (15), insbesondere in Zwischenräume beziehungsweise in Kanäle (16, 17) der Kühleinbauten (15), versenkbar an der Reinigungsvorrichtung (1) angeordnet sind.

9. Reinigungsvorrichtung (1) nach einem der Ansprüche 1 bis 8,
**dadurch gekennzeichnet,**
**dass** die Reinigungsvorrichtung (1) ein Mehrkanalreinigungsmodul (14) mit einer Vielzahl an Hochdruckreinigungsdüsen (10, 11) aufweist.

10. Nasskühlturm (3) mit einem Prozessraum (2), in welchem zum Kühlen eines Kühlmediums Kühleinbauten (15) angeordnet sind,
**dadurch gekennzeichnet,**
**dass** in dem Prozessraum (2) eine Vorrichtung (1) zum Reinigen der Kühleinbauten (15) angeordnet ist.
